(19) Europäisches Patentamt
European Patent Office
Office européen des brevets

(11) Numéro de publication: **0 163 605**
**B1**

(12) # FASCICULE DE BREVET EUROPÉEN

(45) Date de publication du fascicule du brevet: **10.05.89**

(51) Int. Cl.⁴: **B 01 J 49/00,** A 47 L 15/42

(21) Numéro de dépôt: **85810227.0**

(22) Date de dépôt: **14.05.85**

(54) **Procédé pour régénérer une résine échangeuse d'ions et dispositif de régénération.**

(30) Priorité: **17.05.84 CH 2426/84**

(43) Date de publication de la demande:
**04.12.85 Bulletin 85/49**

(45) Mention de la délivrance du brevet:
**10.05.89 Bulletin 89/19**

(84) Etats contractants désignés:
**AT BE CH DE FR GB IT LI LU NL SE**

(56) Documents cité:
**FR-A-2 236 787**
**GB-A-809 685**
**US-A-2 825 666**
**US-A-3 547 810**

**Le dossier contient des informations techniques présentées postérieurement au dépôt de la demande et ne figurant pas dans le présent fascicule.**

(73) Titulaire: **BATTELLE MEMORIAL INSTITUTE, 7 route de Drize, CH- 1227 Carouge/Genève (CH)**

(72) Inventeur: **Porta, Augusto, 52 route de Drize, CH- 1227 Carouge (CH)**
Inventeur: **Schaub, Maurice, Lieu dit Le Fougueux, F-74550 Perrignier (FR)**

(74) Mandataire: **Dousse, Blasco, 7, route de Drize, CH- 1227 Carouge/Genève (CH)**

EP 0 163 605 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention a pour objet un procédé de régénération, après perte de son activité, d'une résine cationique destinée à adoucir de l'eau dure. Une telle régénération s'impose lorsque la résine, saturée, a épuisé son pouvoir de retenir les ions métalliques responsables de la dureté de l'eau à traiter. Des eaux dures ainsi adoucies sont utilisées à des fins industrielles ou à des fins domestiques, par exemple dans les lave-vaisselles ou les machines à laver le linge.

Pour régénérer les résines échangeuses destinées à adoucir l'eau, on utilise le plus souvent des solutions concentrées de sel, les métaux alcalino-terreux capturés par la résine durant le processus d'adoucissment étant progressivement échangés contre des ions sodium et s'éliminant, sous forme de chlorures solubles, dans les eaux d'évacuation.

On peut également utiliser, pour une telle régénération, un acide aqueux, les ions $H^+$ de celui-ci remplaçant alors les cations alcalino-terreux à éliminer; la résine ainsi régénérée comprendra alors des groupes carboxyliques acides au lieu des groupes carboxylate alcalins engendrés par la régénération au sel. Quoique la régénération par l'acide soit efficace et même, dans certains cas, plus rapide que la régénération au sel en raison de la grande mobilité des ions $H^+$, l'utilisation d'acide aquex est peu prisée pour l'usage domestique en raison de l'agressivité de l'acide, des dangers inhérents à sa manipulation et de son action corrosive sur les organes des machines à laver en cas d'éclaboussures. Il était donc désirable de pouvoir bénéficier de la régénération par l'acide sans en avoir les inconvénients et c'est à quoi on est parvenu en engendrant la formation d'une solution acide in situ par voie électrolytique. Par ailleurs, ce procédé présente l'avantage additionnel d'admettre l'utilisation d'eau ordinaire non encore adoucie, c'est-à-dire, en fait, l'eau du robinet dont l'oxydation, au contact de l'anode, fournit l'acide aqueux recherché.

On notera à ce stade que l'emploi de dispositifs électro-chimiques en relation avec la régénération de résines échangeuses d'ions utilisées pour la purification d'eaux usées n'est pas nouveau en soi.

En effet, par exemple, les demandes de brevet DE-A-2 623 277 et DE-A-2 724 724 décrivent deux procédés et un dispositif pour éliminer des ions de métaux lourds contenus dans de l'eau à purifier. Cette eau passe dans un échangeur d'ions contenant une résine sur laquelle viennent se fixer les ions à éliminer. On régénère ensuite cette résine en faisant circuler une solution acide dans l'échangeur d'ions de manière à en éluer les ions de métal lourd. Ces ions sont ensuite déchargés sur l'électrode négative d'une cellule électrolytique. Ces références n'enseignent cependant pas la préparation électrochimique in situ de l'acide aqueux de traitement de la résine.

Le document US-A-3 788 960 décrit un procédé pour régénérer un matériau échangeur d'ions saturé en ions alcalino-terreux. On effectue cette régénération à l'aide d'une solution produite par oxydation de carbonate de sodium dans le compartiment anodique d'une cellule électrolytique. Les ions $Na^+$ issus de la décomposition de ce carbonate migrent ensuite dans le compartiment cathodique où ils vont constituer la solution régénératrice.

Par ailleurs, on citera encore le document AT-A-254 796 où on décrit un procédé pour régénérer une résine échangeuse d'ions par circulation d'un acide monovalent en solution aqueuse. On purifie ensuite cette solution par distillation en présence d'un acide plurivalent dont la temperature de vaporisation est plus élevée que celle de l'acide monovalent. Ce procédé ne fait cependant pas usage d'une cellule électrolytique.

De plus, les documents suivants US-A-2 825 666 et GB-A-809 665 décrivent la régénération électrochimique de résines échangeuses adoucisseuses des eaux dures, cette régénération se faisant au moyen d'une solution aqueuse acide engendrée par oxydation anodique de l'eau à adoucir. Les dispositifs d'électrolyse divulgués dans ces documents comportent, entre les compartiments anodique et cathodique, un séparateur perméable (voir le document américain, Col. 3, ligne 3), c'est-à-dire une barrière que les ions de la solution traversent relativement facilement. Or, l'emploi d'un séparateur dont les pores sont relativement grossiers conduit, pendant l'électrolyse, à un équilibre anolyte-catholyte relativement rapide et le pH du compartiment anodique ne devient pas inférieur à 4 - 5 environ (voir Col. 9, ligne 5) ce qui est insuffisant pour assurer une régénération de la résine adoucisseuse avec un rendement dépassant environ 10 % (voir Col. 8, ligne 30).

Le procédé suivant l'invention, tel que défini à la revendication 1, remédie à ces inconvénients, le pH de la solution anodisée qu'on en obtient atteignant des valeurs inférieures à 4, et même de 1 à 2, par l'emploi, comme séparateur, d'une membrane semi-perméable ou anionique d'un degré de porosité convenable.

On met en oeuvre le procédé de l'invention au moyen d'un dispositif défini à la revendication 7, ce dispositif comprenant, de préférence, une cellule d'électrolyse de l'eau dont le compartiment anodique comporte une entrée et une sortie de liquide, ces orifices étant reliés par des conduites appropriées aux extrémités d'entrée et de sortie d'une colonne remplie de résine adoucisseuse de l'eau à régénérer: le circuit est alimenté en eau en quantité suffisante pour effectuer la régénération de la résine en temps voulu, cette eau étant mise en circulation par des moyens appropriés, par exemple une pompe. En variante, la résine peut être emmagasinée directement dans le compartiment anodique de la cellule d'électrolyse, ce qui constitue une simplification constructive.

Le circuit comprend, en série sur le circuit de liquide, un réservoir tampon pourvu d'une valve de dégazage (pour éliminer les gaz produits durant l'électrolyse) et des éléments nécessaires à mesurer les paramètres de l'eau acidifiée contenue dans ce réservoir (thermomètre, pH-mètre, jauge de pression, etc..).

Le dessin en annexe illustre l'invention en détail.

La fig. 1 représente schématiquement en tant que partie intégrante d'une machine à laver une installation de régénération d'une résine échangeuse d'ions au moyen d'acide aqueux produit dans une cellule électrolytique autonome.

La fig. 2 représente schématiquement une variante de cette installation.

La fig. 3 représente un détail (la cellule électrolytique) d'une autre variante.

L'installation de régénération représentée à la fig. 1 comprend une colonne 1 garnie d'une résine cationique 2 destinée à adoucir de l'eau en provenance d'une conduite d'alimentation 3, cette eau étant envoyée, après adoucissement, par une conduite 4, dans un élement d'utilisation de cette eau adoucie, par exemple le compartiment de lavage d'une machine à laver le linge ou la vaisselle dont fait partie la présente installation de régénération. Celle-ci comprend encore une cellule électrolytique 5 dont la sortie est reliée par une conduite 6 à l'entrée 1a de la colonne 1 par l'intermédiaire d'une vanne de dérivation 7. La présente installation comporte encore un réservoir tampon 8 intercalé sur une conduite 9 reliant la sortie 1b de la colonne 1 à l'entrée 5a de la cellule électrolytique 5 par l'intermédiaire d'une pompe 10.

La cellule électrolytique comprend un diaphragme 11 en matière semi-perméable ou en résine échangeuse anionique divisant la cellule en deux compartiments, l'un contenant une anode 12 et l'autre une cathode 13, celles-ci étant réalisées en matières inertes dans les conditions d'électrolyse habituelles de l'eau, c'est-à-dire, par exemple, en graphite ou en titane platiné. Les orifices 5a et 5b de la cellule 5 s'ouvrent de part et d'autre du compartiment anodique, la solution acide désirée se formant dans ce compartiment comme on le verra ci-après. L'utilisation d'une membrane anionique comme séparateur présente l'avantage de retenir les cations ($H^+$) formés dans le compartiment anodique et ainsi de s'opposer au rééquilibrage des différences de pH entre l'anolyte et le catholyte par transfert de ces $H^+$ du compartiment anodique au compartiment cathodique.

La cellule 5 comprend encore une vanne de sécurité 14 pour prévenir des surpressions éventuelles. Le réservoir tampon 8 comprend divers éléments permettant de mesurer les propriétés de l'acide aqueux formé dans le circuit, notamment une électrode 15 pour la mesure des pH, et d'autres organes de mesure non représentés, par exemple pour mesurer la temprature, la pression et le débit de l'eau en circulation dans la colonne.

L'installation représentée fonctionne comme suit: lorsque la capacité d'adoucissement de la résine 2 de la colonne 1 est épuisée, c'est-à-dire lorsque celle-ci est saturée par les ions alcalino-terreux responsables de la dureté de l'eau, on isole le circuit d'utilisation du circuit de régénération en agissant sur les vannes 7, 7a situées à l'entrée et à la sortie de la colonne 1 puis, après avoir mis en marche le circuit de régénération en enclanchant la pompe 10, on procède à l'électrolyse de l'eau traversant le compartiment d'anode 12 dans les conditions suivantes: température 10 - 60°C environ; tension continue 25 à 100 V; densité de courant 1 - 5 $A/dm^2$; débit 0,1 - 1 l min; capacité du circuit de régénération 1 - 10 l d'eau; poids de la résine échangeuse 100 - 500 g. Au fur et à mesure du processus d'électrolyse, le pH de l'eau diminue, un pH d'environ 3,5 à 4,5 étant déjà efficace pour la régénération de la résine, mais le pourcent de régénération optimum étant atteint lorsque le pH de l'eau se situe entre 1 et 2 ou au dessous de 1. En général, le cycle de régénération pour 100 g de résine et 2 l d'eau dure de 15 à 60 min. Le taux de régénération peut atteindre 60 %, rarement plus dans les conditions précitées, ce taux étant cependant suffisant pour que la résine ainsi régénérée reprenne un pouvoir adoucissant suffisant pour son utilisation en machine à laver dans les conditions habituelles. Une telle résine ainsi régénérée peut convenir peur adoucir de l'eau d'une dureté de l'ordre de 50 - 60 d°F et la réduire à 5 - 20 d°F (on notera que l d°F, degré français, correspond à 10 ppm de $CaCO_3$, c'est-à-dire 4 mg/l de $Ca^{++}$).

La variante de la fig. 2 ne diffère de la forme d'exécution de la fig. 1 que par le mode de branchement des éléments de l'installation (ceux-ci étant désignés, par conséquent, par les mêmes chiffres de référence) et par l'adjonction de deux vannes de dérivation 16, 17 dans le circuit de liquide. Suivant cette variante et suivant la position de réglage des vannes 16, 17, on peut faire circuler le liquide de régénération, soit dans le circuit comprenant la cellule 5 et le réservoir tampon 8, soit, lorsque le pH de l'eau a atteint la valeur voulue, dans un circuit comprenant le réservoir 8 et la colonne 1 contenant la résine à régénérer. Cette technique opératoire permet de faire fonctionner le circuit d'électrolyse afin de préparer la solution de régénération alors que la colonne 1, par le jeu des vannes 7 et 7a est toujours en fonction normale d'utilisation dans la machine à laver. L'acide aqueux du réservoir 8 peut donc être conservé le temps nécessaire et utilisé pour la régénération de la résine à un moment donné par simple réglage approprié des vannes 7, 7a, 16, 17 de manière à isoler le circuit d'utilisation normale de la colonne 1 et de brancher celle-ci sur la circulation de l'acide aqueux du réservoir 8, tout en laissant la cellule 5 momentanément hors circuit. Un tel arrangement permet de gagner du temps en préparant l'acide nécessaire à la régénération sans interrompre la marche de l'adoucisseur d'eau.

La fig. 3 concerne une variante de réalisation de la cellule d'électrolyse combinée avec la colonne échangeuse d'ions. Cette variante comprend une cellule 25 comportant un séparateur 26 divisant la cellule en un compartiment cathodique contenant une cathode 27 et un compartiment anodique contenant une anode 28. Le compartiment anodique est, de plus, rempli de résine échangeuse d'ions, ce compartiment servant, en fait, en temps d'utilisation de la machine à laver, de colonne adoucisseuse d'eau. Lorsque la résine est épuisée, on isole, par le jeu des vannes 29 et 30, le circuit d'adoucissement du reste de la machine et on connecte la "cellule électrolytique-colonne adoucisseuse" de cette variante avec le circuit de régénération comprenant le réservoir 8 et la pompe 10. Le fonctionnement, en régime de régénération, est alors identique à ce qui a été décrit auparavant, la résine se trouvant au siège même de la formation par électrolyse de l'acide engendré dans la cellule.

La réaction de formation de l'acide par électrolyse est la suivante:

$$H_2O \rightarrow 2e + 2H^+ + \tfrac{1}{2}O_2$$

Les exemples qui suivent illustrent l'invention.

**Exemple 1**

On a utilisé un dispositif conforme à la représentation de la fig. 1 mais dont la cellule électrolytique en PVC était combinée à la colonne d'adoucissement suivant la variante de la fig. 3, c'est-à-dire que la résine était incorporée au compartiment anodique. Les divers organes et paramètres opératoires sont les suivants: anode en titane platiné de 2,5 $dm^2$; cathode en graphite; résine cationique de type fortement acide; pompe peristaltique; réservoir tampon de 2 l; capacité du compartiment anodique 125 $cm^3$; quantité de résine 200 g; débit du liquide dans le circuit de régénération 0,5 l/min; voltage 70 V; température ambiante.

La résine a d'abord été mise en contact avec de l'eau dure (55 d°F) jusqu'à saturation et perte complète de son pouvoir adoucisseur. On a ensuite mis en marche le circuit régénérateur dans les conditions susmentionnées. Le tableau qui suit rassemble les résultats et donne des indications sur d'autres paramètres qu'on a fait varier lors des essais, notamment la nature du séparateur (membrane cationique = mc; membrane anionique = ma), le temps de régénération et le courant d'électrolyse. Le tableau donne également, en %, le taux de régénération et le pH de la solution de régénération.

**Tableau**

| Séparateur | temps (min) | Ah | pH | régénération (%) |
|---|---|---|---|---|
| PVC | 90 | 5,4 | 2,5 | 24 |
| mc | 60 | 4,1 | 6,2 | 13 |
| mc | 60 | 4,1 | 2,7 | 27 |
| mc + ma | 45 | 4,3 | 2,6 | 46 |
| mc + ma | 45 | 4,2 | 2,7 | 28 |
| mc + ma | 45 | 4,2 | 3 | 22 |
| mc + ma | 45 | 3,8 | 2,8 | 40 |

**Exemple 2**

On a utilisé un dispositif conforme à celui décrit avec référence à la fig. 2, la colonne d'adoucissement, indépendante de la cellule électrolytique équipée d'un separateur en PVC, étant, soit une colonne de verre de 3 cm de diamètre et de 50 cm de long (CV), soit un adoucisseur en PVC tel qu'utilisé normalement sur les machines à laver du commerce (PVC). Les conditions de travail étaient les mêmes qu'à l'Exemple 1, à l'exception des paramètres du tableau ci-dessous qui rassembele aussi les résultats obtenus.

**Tableau**

| Colonne adoucisseuse | Temps (min) | Ah | régénération (%) |
|---|---|---|---|
| PVC | 60 | 4,5 | 40 |
| PVC | 60 | 4,5 | 27 |
| CV | 45 | 3,3 | 16 |
| CV | 60 | 4,5 | 35 |
| CV | 60 | 4,5 | 48 |

**Exemple 3**

On a utilisé le dispositif représenté à la fig. 2 dans les mêmes conditions qu'aux Exemples précédents, à l'exception des paramètres consignés au tableau suivant, lequel donne également les résultats obtenus. Cet exemple a permis de mettre en évidence l'influence de la nature du séparateur de la cellule d'électrolyse sur le pH de la solution de regénération ainsi que l'importance de celui-ci sur l'efficacité de la régénération.

**Tableau**

| Séparateur | Courant (A) | tension (V) | temps (min) | pH | Efficacité de la régénération (%) |
| --- | --- | --- | --- | --- | --- |
| PORVIC PVC, R = 0,26Ω/cm (Chloride Power Storage Ltd) | 5 | 70 | 50 | 1,7 | Env. 55 |
| DARAMIC, R = 0,16 - 0,35Ω/cm (Grace & Co) | 5 | 70 | 50 | 1,6 | 65 |
| PROTOPLAST (polyethylene) (Grace & Co) | 3 | 70 | 55 | 1,6 | 70 |
| DARAK 2000 (résine phénolique + fibre polyester), R = 0,16Ω/$cm^2$ | 1,5 | 70 | 60 | 2,1 | 45 |
| DARAK 5000 (résine phénolique + fibre polyester), R = 0,22Ω/$cm^2$ | 4 | 70 | 60 | 1,7 | 50 |
| ---- | 4 | 25 | 60 | 1,8 | 50 |

**Revendications**

1. Procédé de régénération, après épuisement de son pouvoir absorbant, d'une résine cationique destinée à adoucir de l'eau dure suivant lequel on la traite par une solution aqueuse d'acide afin de la débarrasser des ions métalliques dont elle s'est chargée, et suivant lequel on prépare cette solution d'acide par électrolyse anodique de cette eau avec dégagement d'oxygène dans une cellule d'électrolyse comportant un séparateur poreux, caractérisé par le fait que celui-ci est une membrane semi-perméable ou échangeuse anionique ayant un degré de porosité tel que le pH de l'eau dans le compartiment anodique soit inférieur à 4.

2. Procédé suivant la revendication 1, caractérisé par le fait que le pH de l'acide aqueux formé dans ledit compartiment anodique et convenant à la régénération est d'environ 1 à 3,5.

3. Procédé suivant la revendication 1, caractérisé par le fait que les paramètres d'électrolyse adaptés à une eau d'une dureté de 30 à 55°F (soit 500 - 600 ppm de $CaCO_3$ et fournissant une solution acide permettant la régénération de ladite résine sont les suivants: température 10 - 60°C; voltage 25 - 100 V; densité de courant 1 - 5 A/$dm^2$, temps d'électrolyse 15 - 60 min.

4. Procédé suivant la revendication 1, caractérisé par le fait qu'on effectue simultanément la production de l'acide et la régénération de la résine par celui-ci, la résine étant emmagasinée dans la cellule d'électrolyse elle-même.

5. Dispositif pour régénérer, par contact avec un acide aqueux, le pouvoir adoucissant vis-à-vis de l'eau d'une résine cationique, ce dispositif, faisant partie intégrante d'une machine à laver le linge ou la vaisselle, comportant un circuit de circulation d'eau incorporant la résine et des moyens pour faire circuler dans celle-ci, soit de l'eau à adoucir, soit ledit acide aqueux, ainsi qu'une cellule électrolytique divisée par un séparateur en un compartiment d'anode et un compartiment de cathode, caractérisé par le fait qu'il comprend, reliée à cette cellule, un réservoir tampon pour emmagasiner temporairement l'acide aquex de régénération formé par électrolyse de l'eau dans cette cellule et par le fait que le séparateur est une membrane semi-perméable ou échangeuse anionique ayant un degré de porosité tel que le pH de l'eau dans le compartiment anodique soit inferieur à 4.

6. Dispositif suivant la revendication 5, caractérisé par le fait qu'il comporte des moyens pour assurer simultanément et indépendemment, d'une part le passage de l'eau à adoucir dans la résine aux fins de son utilisation dans la machine à laver et, d'autre part, la circulation continue d'une quantité limitée de celle-ci dans un circuit fermé comprenant ladite cellule d'électrolyse et ledit réservoir tampon, lesdits moyens permettant également, en temps voulu, de mettre en contact l'acide aqueux dudit réservoir avec la résine pour régénérer celle-ci après épuisement de son pouvoir adoucisseur.

7. Dispositif suivant la revendication 5, caractérisé par le fait que la cellule d'électrolyse comporte des orifices d'entrée et de sortie de l'eau à électrolyser situés de manière que cette eau en circulation traverse essentiellement le compartiment d'anode, parallèlement à cette électrode, de manière que l'acide soit engendré par oxydation anodique au contact de celle-ci.

8. Dispositif suivant la revendication 5, caractérisé par le fait que le séparateur est une membrane de résine

synthétique de résistance 0,16 à 0,35 ohms/$cm^2$.

9. Dispositif suivant la revendication 5, caractérisé par le fait que la résine est emmagasinée dans un récipient branché sur ledit circuit de circulation.

10. Dispositif suivant la revendication 5, caractérisé par le fait que la résine est emmagasinée dans le compartiment anodique de la cellule d'électrolyse.

**Patentansprüche**

1. Verfahren zum Regenerieren eines zum Enthärten harten Wassers bestimmten Kationenharzes nach der Erschöpfung seines Absorbtionsvermögens, wobei es vorgesehen ist, das Harz nach dem Entfernen von in ihm vorhandenen Metallionen mit einer wässrigen Säurelösung zu behandeln, und wobei es vorgesehen ist, die Säurelösung durch anodische Elektrolyse aus besagtem Wasser unter Freisetzen von Sauerstoff in einer einen porösen Abscheider umfassenden Elektrolysezelle herzustellen, dadurch gekennzeichnet, daß der Abscheider eine semipermeable Membrane oder eine Anionentauschermembrane ist, die einen Porositätsgrad derart aufweist, daß der pH-Wert in der Anionenkammer geringer als 4 ist.

2. Verfahren nach Anspruch 1, dadurch gekennzeichnet, daß der pH-Wert der wässrigen Säure, die in der Anionenkammer gebildet wird und der Regeneration dient, in etwa 1 bis 3,5 beträgt.

3. Verfahren nach Anspruch 1, dadurch gekennzeichnet, daß die Elektrolyseparameter, die an Wasser einer Härte von 30 bis 55°F (entsprechend 500 - 600 ppm $CaCO_3$) angepaßt sind und eine für die Regenerierung des Harzes geeignete Säurelösung ergehen, folgende sind:

Temperatur: 10 - 60°C; Spannung: 25 - 100 V; Stromdichte: 1 - 5 A/$dm^2$, Elektrolysezeit 15 - 60 min.

4. Verfahren nach Anspruch 1, dadurch gekennzeichnet, daß die Herstellung der Säure und die Regenerierung des Harzes durch diese gleichzeitig ausgeführt werden, wobei das Harz in der Elektrolysezelle selbst enthalten ist.

5. Vorrichtung zum Regenerieren des Enthärtungsvermögens eines Kationenharzes gegenüber Wasser durch Kontakt mit einer wässrigen Säure, wobei die Vorrichtung integraler Bestandteil einer Wäsche-Waschmaschine oder einer Geschirrspülmaschine ist, mit einer Wasserumwälzung, welche das Harz enthält und Umwälzeinrichtungen für zu enthärtendes Wasser oder für die wässrige Säure sowie eine Elektrolysezelle, die mittels eines Abscheiders in eine Anodenkammer und eine Kathodenkammer unterteilt ist, dadurch gekennzeichnet, daß ein mit dieser Zelle verbundener Pufferbehälter zum zeitweisen Aufbewahren der aus dem Wasser mittels Elektrolyse gewonnenen wässrigen Säure vorgesehen ist, und daß der Abscheider eine semipermeable Membrane oder eine Anionentauscher-Membrane ist, die einen Porositätsgrad derart aufweist, daß der pH-Wert in der Anionenkammer geringer als 4 ist.

6. Vorrichtung nach Anspruch 5, dadurch gekennzeichnet, daß eine Einrichtung zum gleichzeitigen sowie unabhängigen Sicherstellen vorgesehen ist, einerseits des Durchsatzes von zu enthärtendem Wasser durch das Harz jeweils nach Beendigung dessen Verwendung in der Wasch- bzw. Spülmaschine und andererseits des kontinuierlichen Umwälzens einer begrenzten Harzmenge in einem geschlossenen Kreislauf, der die Elektrolysezelle und den Pufferbehälter umfaßt, wobei diese Einrichtungen ebenfalls zu festgesetzten Zeiten das Inkontaktbringen der wässrigen Säure im Behälter mit dem Harz bewirken, um letzteres anschließend an die Erschöpfung seines Enthärtungsvermögens zu regenerieren.

7. Vorrichtung nach Anspruch 5, dadurch gekennzeichnet, daß die Elektrolysezelle Einlaß- und Auslaßöffnungen für das zu elektrolysierende Wasser umfaßt, die derart angeordnet sind, daß dieses Wasser im Umlauf vollständig die Anodenkammer parallel zu dieser Elektrode derart durchsetzt, daß die Säure durch anodische Oxidation in Kontakt mit dieser verbleibt.

8. Vorrichtung nach Anspruch 5, dadurch gekennzeichnet, daß der Abscheider eine Membrane aus synthetischem Harz mit einem Widerstand von 0,16 bis 0,35 Ohm/$cm^2$ ist.

9. Vorrichtung nach Anspruch 5, dadurch gekennzeichnet, daß das Harz in einem Behältnis aufgenommen ist, das von dem Umwälzkreis abgezweigt ist.

10. Vorrichtung nach Anspruch 5, dadurch gekennzeichnet, daß das Harz in der Anodenkammer der Elektrolysezelle aufgenommen ist.

**Claims**

1. A method for regenerating a cationic resin used for the softening of hard water, when its absorption capacity has been exhausted, in which the resin is treated with an aqueous acidic solution in order to remove the metallic ions trapped therein, and in which this acidic solution is prepared by anodic electrolysis of said water with oxygen evolution in an electrolytic cell comprising a porous separater, characterized in that the separator is a semi-permeable, or ion-exchange membrane with a porosity of such grade that the pH of the water in the anodic compartment be lower than 4.

2. A method according to claim 1, characterized in that the pH of the aqueous acid formed in said anodic compartment which suits said regeneration is about 1 to 3.5.

3. A method according to claim 1, characterized in that the electrolysis parameters adapted to a 30 - 55°F hard water (i.e. 500 - 600 ppm of $CaCO_3$) to provide an acidic solution for the regeneration of said resin are as follows: temperature 10 - 60°C; voltage 25 - 100 V; current density 1 - 5 A/dm$^2$; electrolysis time 15 - 60 min.

4. A method according to claim 1, characterized in that the production of the acid is brought about simultaneously with the regeneration of the resin by means of the former, the resin being stored within the electrolytic cell.

5. A device for regenerating the softening capacity for hard water of a cationic resin by contacting it with an aqueous acid, this device which is integral with a clothes- or dish-washer comprising a water flow circuit connected to the resin and means for flowing thereinto either water to be softened, or said aqueous acid, and an electrolytic cell divided by a separator into an anode compartment and a cathode compartment, characterized in further comprising a buffer reservoir connected to said cell to temporarily store the regenerating aqueous acid resulting from the electrolysis of water in said cell and in that the separator is an anion-exchange or semi-permeable membrane whose porosity grade is of such value that the pH of the water in the anode compartment is below 4.

6. A device according to claim 5, characterized in having means for simultaneously and independently allowing the water to be softened to pass, on one hand, through the resin and thereafter in the washer to be used therein and, on the other hand, to circulate in limited quantity in a closed circuit including said electrolytic cell and said buffer reservoir, said means being also for allowing the aqueous acid of said reservoir to come into contact in due time with the resin in order that it is regenerated after its softening capacity has been exhausted.

7. A device according to claim 5, characterized in that the electrolytic cell comprises input and output openings for the water to be electrolyzed, said openings being so arranged that the circulating water which passes substantially all through the compartment of anode will follow a direction parallel thereto so as to generate the acid by anodic oxidation by contact therewith.

8. A device according to claim 5, characterized in that the separator is a membrane of synthetic resin whose resistance is 0.16 to 0.35 Ω/cm$^2$.

9. A device according to claim 5, characterized in that the resin is stored in a container connected to said water flow circuit.

10. A device according to claim 5, characterized in that the resin is stored in the anode compartment of the electrolytic cell.

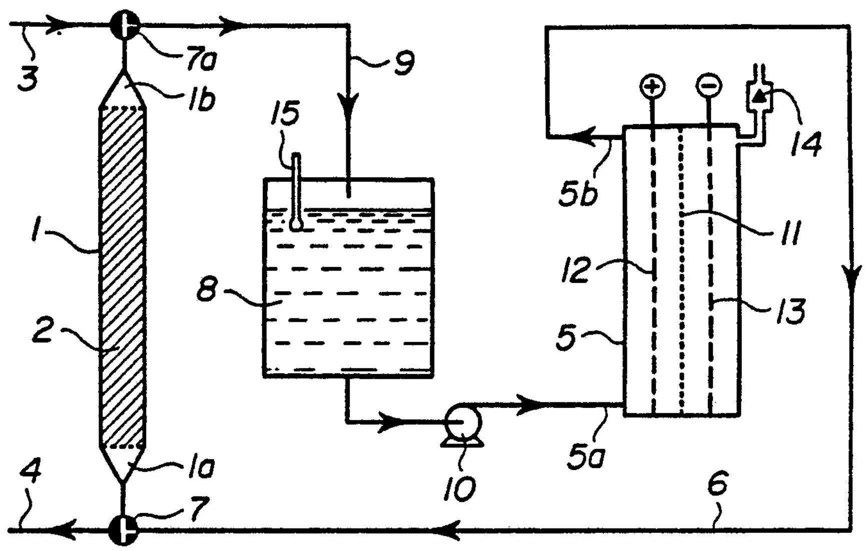


FIG. 1

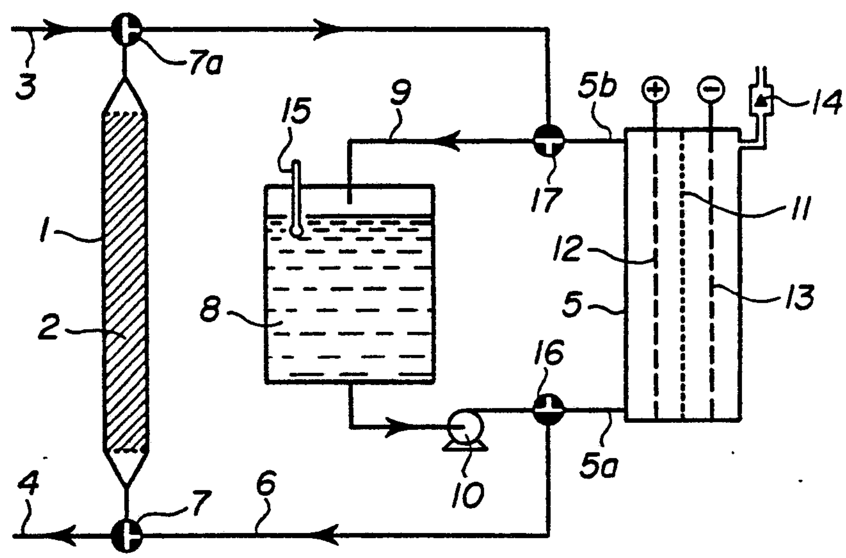


FIG. 2

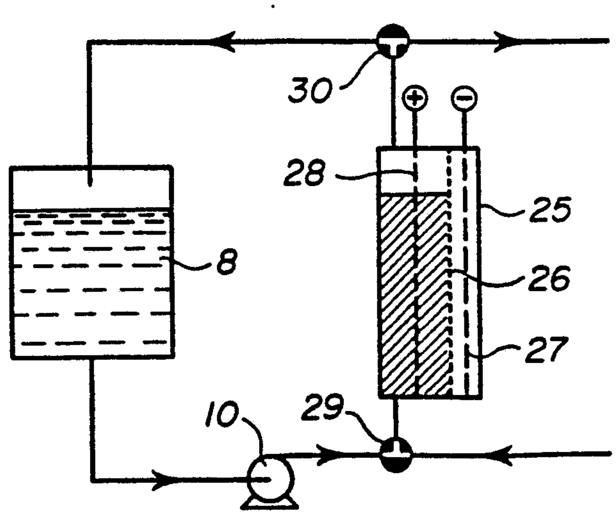


FIG. 3